# FASCICULE DE BREVET EUROPEEN

(11) **EP 3 481 655 B1**
(45) Date de publication et mention de la délivrance du brevet: **12.10.2022**
(21) Numéro de dépôt: 17742805.9
(22) Date de dépôt: 20.06.2017
(51) Int. Cl.: B60H 1/00, B60H 1/32

(54) **DISPOSITIF DE CHAUFFAGE, VENTILATION ET/OU CLIMATISATION POUR VEHICULE AUTOMOBILE**
HEIZUNGS-, LÜFTUNGS- UND/ODER KLIMATISIERUNGSVORRICHTUNG FÜR EIN KRAFTFAHRZEUG
HEATING, VENTILATION AND/OR AIR CONDITIONING DEVICE FOR A MOTOR VEHICLE

(30) Priorité: 07.07.2016 FR 1656513
(43) Date de publication de la demande: 15.05.2019
(73) Titulaire: Valeo Systemes Thermiques, 78320 Le Mesnil Saint Denis (FR)
(72) Inventeur: JOVET, Bastien, 78322 LE MESNIL SAINT DENIS CEDEX (FR); AILLOUD, Fabrice, 78322 LE MESNIL SAINT-DENIS CEDEX (FR); MARTINELL, Amanda, 78322 LE MESNIL SAINT-DENIS CEDEX (FR); PIERRES, Philippe, 78322 LE MESNIL SAINT-DENIS CEDEX (FR)
(74) Mandataire: Valeo Systèmes Thermiques
(86) Numéro de dépôt international: PCT/FR2017/051616
(87) Numéro de publication internationale: WO 2018/007708

(56) Documents cités:
- FR-A1- 3 003 808
- JP-A- 2002 079 822
- JP-A- 2004 314 709
- JP-A- 2005 335 508
- JP-A- 2012 153 223
- JP-A- 2013 018 299
- US-A- 4 604 873

## Description

### Domaine de l'invention

La présente invention concerne le domaine des dispositifs de chauffage, ventilation et/ou climatisation pour véhicule automobile.

### Etat de la technique

Un véhicule automobile est couramment équipé d'un dispositif de ventilation, de chauffage et/ou de climatisation pour réguler les paramètres aérothermiques d'un flux d'air distribué vers l'intérieur de l'habitacle du véhicule. Le dispositif comprend généralement un boîtier délimité par des cloisons dans lesquelles sont ménagées des ouvertures, dont au moins une entrée d'air et au moins une sortie d'air.

De façon connue, le boîtier loge un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle. A titre d'exemple, les moyens de traitement thermique peuvent comprendre un évaporateur qui est destiné à refroidir et déshumidifier le flux d'air le traversant, ainsi qu'un radiateur, éventuellement associé à un radiateur additionnel, qui est destiné à réchauffer le flux d'air qui le traverse.

Il est connu, dans ces dispositifs, d'avoir un évaporateur disposé en aval de l'entrée d'air, de sorte que la totalité du flux d'air entrant à l'intérieur du boîtier soit déshumidifié par l'évaporateur. Puis, le flux d'air froid ainsi généré est admis dans une chambre de mixage principale et/ou orienté vers un organe de chauffage, notamment un radiateur et éventuellement un radiateur additionnel, pour obtenir un flux d'air chaud. La chambre de mixage principale sert à mélanger un ou plusieurs flux d'air froid et/ou chaud de sorte que le flux d'air issu du mélange, ayant la température de consigne souhaitée, soit distribué vers des zones spécifiques de l'habitacle du véhicule automobile. La chambre de mixage principale est pourvue d'un premier organe de mixage afin de définir la proportion du flux d'air froid et du flux d'air chaud issu de la chambre de chauffage pénétrant dans la chambre de mixage principale. Cet organe permet ainsi d'ajuster la température du flux d'air mélangé destiné à être distribué dans la(es) zone(s) dédiées de l'habitacle, comme par exemple les zones avant et arrière. Toutefois, il est également souhaitable de prévoir une possibilité de gérer thermiquement les différentes zones du véhicule de manière indépendante, notamment pour les véhicules haut de gamme. Pour ce faire, le boîtier loge également une chambre de mixage secondaire destinée à générer un flux d'air secondaire pour aérer une ou plusieurs autres zones de l'habitacle. La chambre de mixage secondaire est aussi en communication aéraulique avec l'organe de chauffage et apte à recevoir tout ou une partie du flux d'air ayant traversé l'évaporateur du dispositif de chauffage, de ventilation et/ou de climatisation. La chambre de mixage secondaire est équipée d'un deuxième organe de mixage afin de définir la proportion du flux d'air froid et du flux d'air chaud pénétrant dans la chambre de mixage secondaire pour ajuster la température du flux d'air distribué dans les autres zones du véhicule.

Il est connu de prévoir un chemin de contournement de l'évaporateur, pour plusieurs raisons.

Il peut s'agir de soulager le compresseur, et donc gagner en consommation, en envoyant le flux d'air dans le chemin de contournement au lieu de l'envoyer obligatoirement dans l'évaporateur.

Or l'évaporateur, de par sa fonction, assèche l'air et produit des condensats qui gouttent sous l'évaporateur, donc dans le chemin de contournement. Cela n'est pas souhaitable, car l'air cheminant dans ce chemin de contournement s'humidifie au contact de ces condensats, et peut créer un effet « postillons ». De plus, les condensats ont tendance à stagner dans le chemin de contournement, ce qui risque de dégager une mauvaise odeur dans l'habitacle.

Des exemples sont divulgués dans les documents : FR3003808, JP2012153223, JP2005335508, US4604873, JP2002079822, JP2013018299 et JP2004314709.

### Résumé de l'invention

La présente invention a pour objectif de pallier les différents inconvénients énoncés ci-dessus, au moyen d'un dispositif permettant de drainer les condensats générés par l'évaporateur et de les guider vers l'extérieur du véhicule, et ce sans dégrader la vitesse du flux d'air traversant le chemin de contournement, afin de conserver une ventilation optimale dans l'habitacle.

Pour atteindre cet objectif, le dispositif de chauffage, ventilation et/ou climatisation pour véhicule automobile selon l'invention comprend les caractéristiques de la revendication 1.

L'idée principale de cette invention consiste à prévoir, au sein même du chemin de contournement, une solution pour récupérer et évacuer les condensats générés par évaporateur. Le chemin de contournement est utilisé pour remplir ainsi deux fonctions, à savoir la fonction de bypass de l'échangeur, et la fonction de gestion des condensats. De cette manière, les dimensions extérieures du dispositif de chauffage, ventilation et/ou climatisation restent inchangées, et permettent de conserver un dispositif compact au sein du véhicule automobile.

### Présentation des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 illustre une vue de profil du dispositif de chauffage, ventilation et/ou climatisation selon l'invention ;
- la figure 2 représente, en perspective, d'un passage de contournement situé sous l'évaporateur selon la figure 1 , qui ne fait pas partie de l'invention;
- les figures 3 à 5 montrent, en perspective, trois formes possibles de bol de collecte des condensats , dont seulement la forme représentée dans la figure 5 est conforme à l'invention. ;
- la figure 6 représente, en vue de coupe, le passage de contournement situé sous l'évaporateur avec un bol de collecte conforme à la figure 4 ;
- la figure 7 représente, en vue de coupe, le passage de contournement situé sous l'évaporateur avec un bol de collecte conforme à la figure 5.

### Description détaillée

Dans la suite de la description, des éléments présentant une structure identique ou des fonctions analogues sont désignés par les mêmes références.

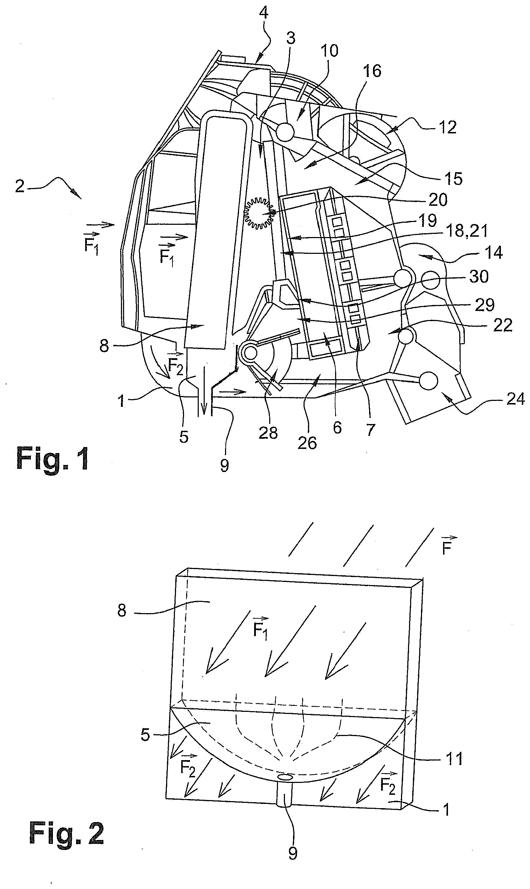

Pour obtenir un dispositif de chauffage, ventilation et/ou climatisation avec un faible encombrement stérique tout en ayant une cinématique simple, dans le cadre d'un traitement thermique pour plusieurs zones du véhicule, l'invention telle qu'illustrée à la figure 1, propose un dispositif 2 de chauffage, ventilation et/ou climatisation comprenant un boîtier 4 définissant un canal 3 d'écoulement d'un flux air dans lequel sont logés des moyens de traitement thermique du flux d'air destiné à être distribué dans l'habitacle.

Les moyens de traitement thermique comprennent un premier échangeur de chaleur 6, par exemple un radiateur, destiné à réchauffer une partie du flux d'air circulant dans le dispositif 2 de chauffage, ventilation et/ou climatisation. Le premier échangeur de chaleur 6 peut éventuellement être couplé à un radiateur électrique 7 additionnel destiné à réchauffer le flux d'air de manière plus rapide, notamment dans le cas d'un démarrage du véhicule.

Les moyens de traitement thermique comprennent également un deuxième échangeur de chaleur 8, par exemple un évaporateur, agencé en amont par rapport à la direction de l'écoulement du flux d'air du premier échangeur de chaleur 6. Le deuxième échangeur de chaleur 8 est destiné à refroidir et déshumidifier l'intégralité du flux d'air circulant dans le dispositif de chauffage. Le flux d'air est introduit dans le boîtier 4 par une entrée (non illustrée) puis est dirigé vers une sortie, après avoir été traité thermiquement par les échangeurs de chaleur 6, 7, 8, par l'intermédiaire d'un pulseur (non illustré). La sortie comprend plusieurs conduits distribuant les flux d'air vers des buses débouchant dans l'habitacle avec notamment le conduit 10 menant le flux d'air pour la buse de dégivrage permettant de désembuer le pare-brise, le conduit 12 menant le flux d'air vers la buse de ventilation latéraux/centraux permettant de refroidir/réchauffer les passagers du véhicule, ainsi que le conduit 14 orientant le flux d'air vers la buse pied permettant de réchauffer les pieds des passagers avant du véhicule. Afin de pouvoir distribuer les flux d'air vers les buses aux températures souhaitées, le dispositif 2 de chauffage, ventilation et climatisation comprend une première zone de mixage 15 où un flux d'air chaud et un flux d'air froid, issus respectivement des échangeurs de chaleur 6 et 8, sont mélangés dans des proportions variables puis acheminés vers les buses débouchant dans l'habitacle.

Pour garantir que le flux d'air froid, issu du deuxième échangeur de chaleur 8, ne soit pas thermiquement contaminé par le premier échangeur de chaleur 6, le dispositif 2 comprend un premier chemin de contournement 16 du premier échangeur de chaleur 6. Ainsi, le flux d'air froid, ayant traversé le deuxième échangeur de chaleur 8, circule soit à travers le premier échangeur de chaleur 6 pour être réchauffé, soit contourne le premier échangeur de chaleur 6 par le premier chemin de contournement 16 pour conserver sa température. Les deux flux d'air chaud et froid sont orientés en direction de la première zone de mixage 15 pour y être mélangés et distribués vers les buses de sortie aux températures consignées. Pour réaliser ce mélange dans des proportions variables, le dispositif 2 comprend un premier volet 18 permettant de réguler la proportion de flux d'air froid passant par le premier échangeur de chaleur 6 et la proportion de flux d'air froid passant par le premier chemin de contournement 16.

Le premier volet 18 est de type coulissant et comprend une porte 21 sur laquelle est agencée une crémaillère. Afin de mettre le premier volet 18 en mouvement, un engrenage 20 complémentaire à la crémaillère est mis en rotation autour d'un axe A par un actionneur non illustré. La rotation de l'engrenage entraîne le mouvement en translation de la porte 21 entre deux positions extrêmes, une position où le premier volet 18 bloque l'accès du flux d'air froid au premier chemin de contournement 16 et une position où le premier volet bloque l'accès du flux d'air froid au premier échangeur de chaleur 6. L'accès du flux d'air froid au premier échangeur de chaleur 6, est réalisé par l'intermédiaire d'un couloir 19 correspondant à une portion du canal 3 d'écoulement d'un flux d'air situé entre une paroi de séparation 30 et le premier échangeur de chaleur 6.

Selon le positionnement du premier volet 18, le flux d'air froid issu du deuxième échangeur de chaleur 8 est orienté, dans des proportions variables, vers le premier échangeur de chaleur 6 et/ou directement vers la première zone de mixage 15. Selon la configuration telle que illustrée à la figure 1, le flux d'air froid est directement et intégralement orienté vers la première zone de mixage 15 puis vers les conduits 10, 12, 14 de sortie.

Un tel dispositif est adapté pour un traitement thermique homogène où les différentes zones du véhicule sont aérées à une même température.

Toutefois, si on souhaite avoir une distinction de température entre deux zones du véhicule, comme par exemple l'avant et l'arrière de l'habitacle, il convient de rajouter une seconde zone de mixage 22. La seconde zone de mixage 22, de manière analogue à la première zone de mixage 15, permet aux flux d'air chaud et froid, issus respectivement des échangeurs de chaleur 6 et 8, d'être mélangés dans des proportions variables puis acheminés vers au moins une buse débouchant dans la zone de l'habitacle appropriée par l'intermédiaire d'un conduit 24.

Tout comme pour la première zone de mixage 15, pour garantir que le flux d'air froid, issu du deuxième échangeur de chaleur 8, ne soit pas thermiquement contaminé par le premier échangeur de chaleur 6, ledit dispositif 2 comprend un deuxième chemin de contournement 26 du premier échangeur de chaleur 6, le deuxième chemin de contournement 26 étant agencé à distance du premier chemin de contournement 16.

Ainsi, le flux d'air froid, ayant traversé le deuxième échangeur de chaleur 8, circule soit à travers le premier échangeur de chaleur 6 pour être réchauffé, soit contourne le premier échangeur de chaleur 6 par le deuxième chemin de contournement 26 pour conserver sa température basse. Les deux flux d'air chaud et froid sont orientés en direction de la deuxième zone de mixage 22 pour y être mélangés et distribués vers les buses de sortie de la zone du véhicule appropriée aux températures consignées. Pour réaliser ce mélange dans des proportions variables, le dispositif 2 comprend un deuxième volet 28 permettant de réguler la proportion de flux d'air froid passant par le premier échangeur de chaleur 6 et la proportion de flux d'air froid passant par le deuxième chemin de contournement 26.

Le deuxième volet 28 peut être d'un type différent que le premier volet 18 comme illustré ici. Tel qu'illustré sur le mode de réalisation de la figure 1, le deuxième volet 28 correspond à un volet tambour. Bien évidemment, tout autre type de volet tel qu'un volet drapeau ou papillon ou coulissant convient à mettre en oeuvre le dispositif 2 selon l'invention.

Afin de mettre le deuxième volet 28 en mouvement, un actionneur non illustré met en rotation le deuxième volet 28 autour d'un axe B entre deux positions extrêmes, une position où le deuxième volet 28 bloque l'accès du flux d'air froid au deuxième chemin de contournement 26 et une position où le deuxième volet bloque l'accès du flux d'air froid au premier échangeur de chaleur 6. Ici aussi l'accès du flux d'air froid au premier échangeur de chaleur est réalisé par l'intermédiaire d'un couloir 29 correspondant à une autre portion du canal 3 d'écoulement d'un flux d'air situé entre la paroi de séparation 30 et le premier échangeur de chaleur 6.

Selon le positionnement du deuxième volet 28, le flux d'air froid issu du deuxième échangeur de chaleur 8 est orienté, dans des proportions variables, vers le premier échangeur de chaleur 6 et/ou directement vers la deuxième zone de mixage 22.

Selon la configuration telle que illustrée à la figure 1, le flux d'air froid est majoritairement orienté vers le premier échangeur de chaleur 6 puis vers la deuxième zone de mixage 22 et minoritairement orienté directement vers la deuxième zone de mixage 22. Tels qu'illustré à la figure 1, lesdits premier et deuxième volets 18, 28 sont agencés en amont, par rapport à la direction de l'écoulement du flux d'air, du premier l'échangeur de chaleur 6, et en aval du second échangeur de chaleur 8. Il est possible, selon un mode de réalisation non représenté, d'agencer les premier et deuxième volets 18,28 en aval du premier échangeur de chaleur 6.

Un tel dispositif est adapté pour un traitement thermique multizone où différentes zones du véhicule peuvent être aérées à des températures différentes. Un passager peut commander une température de consigne pour le flux d'air issu de la première zone de mixage 15, et un autre passager peut commander une température de consigne différente pour le flux d'air issu de la deuxième zone de mixage 22.

Afin de garantir la dépendance ou l'indépendance des deux chambres de mixage 15, 22 un volet 32 est agencé entre les deux chambres de mixage 15, 22 pouvant ainsi soit les réunir, soit isoler l'une de l'autre. Typiquement, il est avantageux pour un dispositif de chauffage, ventilation et/ou climatisation fonctionnant selon un mode en trois-quatre zones d'avoir les deux chambres de mixage 15, 22 indépendantes.

Tandis que pour un mode un-deux zones ou à double nappes (couramment appelé double-layer en anglais), il est plus avantageux d'avoir les chambres de mixage 15, 22 dépendantes. Bien entendu, le volet 32 isole les deux chambres de mixage 15, 22 en adoptant une position extrême dite « fermée », tel qu'illustré à la figure 2, et réunit les deux chambres en adoptant une position extrême dite « ouverte ».

Bien qu'un volet de type coulissant requiert peu d'espace, la cinématique requise pour déplacer l'engrenage 20 et la porte 21 est complexe et particulièrement onéreuse. De même, bien qu'un volet de type tambour présente une cinématique simple, ce type de volet occupe un volume important. Le dispositif 2 de chauffage, ventilation et/ou climatisation selon l'invention permet donc d'avoir une climatisation adapté pour un fonctionnement en multizone avec un encombrement stérique et une cinématique acceptables à un coût moindre.

Le dispositif 2 comprend un chemin de contournement 1, aussi connu sous le nom de « canal de by-pass » de l'anglais, du premier échangeur de chaleur, c'est-à-dire un chemin de contournement 1 de l'évaporateur 8. Ce chemin 1 est disposé sous l'évaporateur 8.

Ainsi, le flux d'air général F arrivant dans le dispositif 2 peut se diviser en un flux d'air principal F1 passant à travers l'évaporateur 8 et arrivant dans le canal d'écoulement 3, et en un flux d'air secondaire F2 passant dans le chemin de contournement 1 et arrivant au niveau du volet 28.

Selon la position du volet 28, ce flux d'air secondaire F2 peut ensuite passer dans le radiateur 6, ou directement emprunter le chemin de contournement 26 du radiateur 6 pour arriver dans la seconde zone de mixage 22.

Dans le cas d'un air recyclé, donc peu humide, cet air peut ainsi contourner l'évaporateur 8 puis le radiateur 6 pour être directement distribué dans le conduit 24.

Ce chemin de contournement 1 de l'évaporateur 8 comprend un système d'évacuation des condensats 11 générés par l'évaporateur 8. Il s'agit plus précisément d'un bol 5 de collecte des condensats 11, positionné à l'intérieur du chemin de contournement 1, en partie sous l'évaporateur 8 ainsi qu'en aval de l'évaporateur afin de récupérer la quantité maximal de condensats 11 générés sur la surface de l'évaporateur. Ce bol 5 est relié à un conduit 9 d'évacuation des condensats 11, afin qu'ils ne stagnent pas dans le bol 5.

Comme cela est mieux représenté en figure 2, le bol 5 collecte les condensats 11 tombant par gravité depuis l'évaporateur 8. Ces condensats 11 sont ensuite évacués par le conduit 9 vers l'extérieur du dispositif 2. Le bol 5 présente une forme permettant au flux secondaire F2 de circuler autour de lui au sein du chemin de contournement 1. Cette forme de réalisation ne fait pas partie de l'invention.

L'évaporateur 8 présente :
- une face avant par laquelle entre le flux d'air principal F1,
- une face arrière par laquelle ressort le flux d'air principal F1,
- deux faces latérales opposées,
- une face supérieure proximale du conduit 10 pare-brise, et une face inférieure 23 proximale du volet 28. L'évaporateur 8 a ainsi une forme parallélépipédique.

Le bol 5 présente :
- une face supérieure 17 qui peut être située en partie en vis-à-vis de la face inférieure 23 de l'évaporateur 8, avec toujours une partie située en aval de l'évaporateur 8,
- une face avant prolongeant la face avant de l'évaporateur 8 et contre laquelle arrive le flux d'air secondaire F2 ;
- une face arrière prolongeant la face arrière de l'évaporateur 8 ;
- deux faces latérales 13 opposées.

Les deux faces latérales 13 du bol 5 consistent en des parois inclinées, afin que les condensats 11 soient guidés vers un point bas débouchant sur le conduit d'évacuation 9.

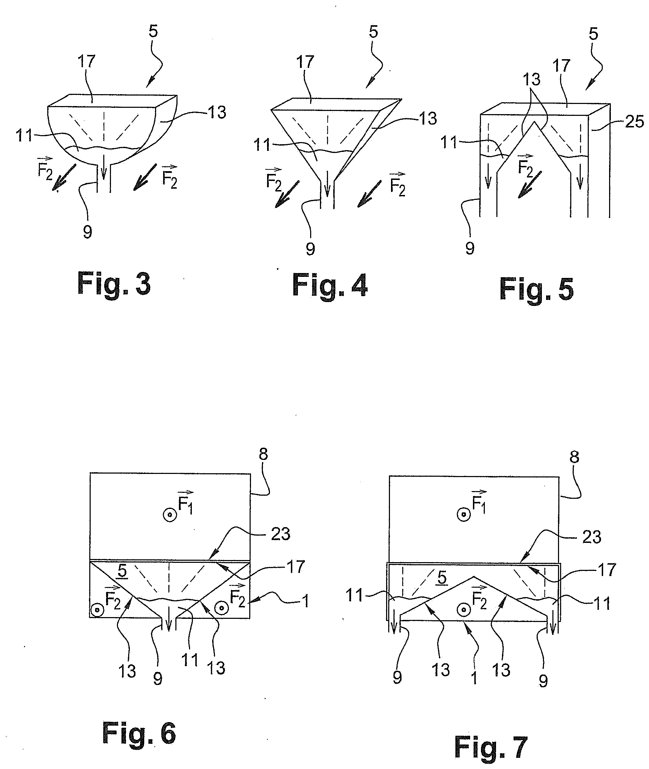

Les figures 3 à 5 présentent plusieurs formes possibles de bol 5, dont seulement la forme représentée dans la figure 5 est conforme à l'invention.

En figure 3, le bol 5 a une forme en U, avec au moins deux parois latérales 13 arrondies avec une concavité faisant descendre les condensats 11 vers un point bas débouchant sur le conduit 9.

En figure 4, le bol 5 a une forme en V, avec deux parois latérales 13 planes, dont l'inclinaison permet aux condensats 11 de descendre vers un point bas débouchant sur le conduit 9.

En figure 5, le bol 5 a une forme en W, avec :
- deux parois latérales 13 intérieures, ou situées de manière centrale, planes présentant une inclinaison ;
- et deux parois latérales 25 extérieures, ou situées aux extrémités du bol 5, planes ne présentant pas d'inclinaison et prolongeant les deux faces latérales de l'évaporateur 8.

Les parois latérales 13 intérieures démarrent au centre du bol 5 et sont orientées chacune vers une paroi latérale 25 extérieure.

Ces quatre parois latérales 13,25 forment deux zones de collecte de condensats 11, présentant chacune un point bas latéral débouchant sur un conduit 9 d'évacuation. Ce bol 5 présente ainsi deux points bas latéraux, et est relié à deux conduits 9. Les condensats 11 formés par l'évaporateur 8 tombent dans l'une ou l'autre zone de collecte.

Dans le cas du bol 5 en forme de U ou de V, le flux d'air secondaire F2 chemine de part et d'autre du bol 5 et du conduit d'évacuation 9, comme cela est illustré en figure 6. Ce flux d'air F2 emprunte ainsi deux passages différents.

Dans le cas du bol 5 en forme de W, le flux d'air secondaire F2 chemine entre les deux parois inclinées 13 du bol et les deux conduits d'évacuation 9, comme cela est illustré en figure 7. Ce flux d'air F2 emprunte ainsi un unique passage central.

Le bol 5 est dimensionné de manière à laisser un espace suffisant au sein du chemin de contournement 1 pour que le flux d'air secondaire F2 puisse circuler à un débit suffisant, notamment lorsqu'une consigne de ventilation maximale est demandée dans l'habitacle. En effet, la présence du bol 5 dans le chemin de contournement 1 entraîne une perte de charge, qui ne doit pas entraver les performances aérauliques du dispositif 2.

La section transversale du bol 5, correspondant à la section de la paroi avant ou arrière, est ainsi dimensionnée par rapport à la section transversale du chemin de contournement 1, de manière à ne pas occuper trop de place, et à laisser un passage suffisamment grand pour la circulation du flux d'air secondaire F2.

Le bol 5 est conçu dans un matériau étanche, d'une part pour qu'il n'y ait aucune fuite des condensats 11 dans le chemin de contournement 1, et d'autre part pour qu'il n'y ait pas d'infiltration d'air dans le bol 5.

Le bol 5 peut consister en un élément rajouté dans le chemin de contournement 1.

Cependant, les parois formant le chemin de contournement 1 et le bol 5 peuvent consister en un unique ensemble, obtenu par exemple par moulage, et directement intégrable dans le dispositif 2.

Les configurations montrées aux figures citées ne sont que des exemples possibles, nullement limitatifs, de l'invention qui englobe au contraire les variantes de formes et de conceptions à la portée de l'homme de l'art.

## Revendications

1. Dispositif (2) de chauffage, ventilation et/ou climatisation pour véhicule automobile, comprenant :
- un canal d'écoulement d'un flux d'air principal (F1),
- un premier évaporateur (8) localisé dans ledit canal d'écoulement, ledit évaporateur (8) permettant un écoulement par gravité de condensats (11) issus dudit flux d'air principal (F1) au contact dudit évaporateur (8),
- un chemin de contournement (1) de l'évaporateur (8) emprunté par un flux d'air secondaire (F2),
- des moyens de gestion (5,9) des condensats (11) localisés dans le chemin de contournement (1) de l'évaporateur (8), lesdits moyens de gestion (5,9) des condensats (11) comportent un bol (5) de collecte des condensats (11), ledit bol (5) présentant une section supérieure (17) plus grande que la section inférieure (23) de l'évaporateur (8), le bol (5) étant conçu dans un matériau étanche, d'une part pour qu'il n'y ait aucune fuite des condensats (11) dans le chemin de contournement (1), et d'autre part pour qu'il n'y ait pas d'infiltration d'air dans le bol (5), **caractérisé en ce que**, ledit bol (5) étant en forme de W avec deux parois latérales (13) intérieures planes présentant une inclinaison et deux parois latérales (25) extérieures planes ne présentant pas d'inclinaison et prolongeant deux faces latérales de l'évaporateur (8), les parois latérales (13) intérieures démarrant au centre du bol (5) et étant orientées chacune vers une paroi latérale (25) extérieure, deux conduits (9) d'évacuation latéraux étant localisés au niveau des deux points bas du W.

2. Dispositif (2) selon la revendication 1, **caractérisé en ce que** le bol (5) de collecte est relié aux deux conduites (9) d'évacuation des condensats (11).

3. Dispositif (2) selon l'une des revendications 1 à 2, **caractérisé en ce que** lesdites deux parois latérales intérieures (13) du bol (5) guident les condensats (11) vers au moins lesdits deux conduits (9) d'évacuation.

4. Dispositif (2) selon l'une des revendications précédentes, **caractérisé en ce que** le flux d'air secondaire (F2) chemine entre les deux conduits (9) d'évacuation latéraux au sein du chemin de contournement (1).

5. Dispositif 2 selon l'une des revendications 1 à 4, **caractérisé en ce que** ledit bol (5) est conçu dans un matériau étanche, du type plastique.

6. Dispositif (2) selon l'une des revendications 1 à 5, **caractérisé en ce que** le chemin de contournement (1) est délimité par des parois, ledit bol (5) étant moulé avec les parois de manière à former une unique pièce intégrable dans le dispositif (2).

## Patentansprüche

1. Heizungs-, Lüftungs- und/oder Klimatisierungsvorrichtung (2) für ein Kraftfahrzeug, welche umfasst:
- einen Strömungskanal eines Hauptluftstroms (F1),
- einen ersten Verdampfer (8), der sich im Strömungskanal befindet, wobei der Verdampfer (8) einen Schwerkraftfluss von Kondensaten (11) ermöglicht, die von dem im Kontakt mit dem Verdampfer (8) befindlichen Hauptluftstrom (F1) stammen,
- einen Bypasspfad (1) des Verdampfers (8), durch den ein sekundärer Luftstrom (F2) strömt,
- Mittel zur Lenkung (5, 9) der Kondensate (11), die sich im Bypasspfad (1) des Verdampfers (8) befinden, wobei die Mittel zur Lenkung (5, 9) der Kondensate (11) eine Schale (5) zum Sammeln der Kondensate (11) aufweisen, wobei die Schale (5) einen oberen Querschnitt (17) aufweist, der größer als der untere Querschnitt (23) des Verdampfers (8) ist, wobei die Schale (5) aus einem dichten Material ausgebildet ist, einerseits damit keine Leckage von Kondensaten (11) im Bypasspfad (1) auftritt, und andererseits damit kein Eindringen von Luft in die Schale (5) erfolgt,
**dadurch gekennzeichnet, dass** die Schale (5) W-förmig ist, mit zwei ebenen inneren Seitenwänden (13), die eine Neigung aufweisen, und zwei ebenen äußeren Seitenwänden (25), die keine Neigung aufweisen und zwei Seitenflächen des Verdampfers (8) verlängern, wobei die inneren Seitenwände (13) in der Mitte der Schale (5) beginnen und jeweils zu einer äußeren Seitenwand (25) hin ausgerichtet sind, wobei sich an den zwei unteren Punkten des "W" zwei seitliche Ablaufleitungen (9) befinden.

2. Vorrichtung (2) nach Anspruch 1, **dadurch gekennzeichnet, dass** die Sammelschale (5) mit den zwei Ablaufleitungen (9) der Kondensate (11) verbunden ist.

3. Vorrichtung (2) nach einem der Ansprüche 1 bis 2, **dadurch gekennzeichnet, dass** die zwei inneren Seitenwände (13) der Schale (5) die Kondensate (11) wenigstens zu den zwei Ablaufleitungen (9) hin lenken.

4. Vorrichtung (2) nach einem der vorhergehenden Ansprüche, **dadurch gekennzeichnet, dass** der sekundäre Luftstrom (F2) zwischen den zwei seitlichen Ablaufleitungen (9) innerhalb des Bypasspfades (1) strömt.

5. Vorrichtung (2) nach einem der Ansprüche 1 bis 4, **dadurch gekennzeichnet, dass** die Schale (5) aus einem dichten Material vom Kunststofftyp ausgebildet ist.

6. Vorrichtung (2) nach einem der Ansprüche 1 bis 5, **dadurch gekennzeichnet, dass** der Bypasspfad (1) von Wänden begrenzt wird, wobei die Schale (5) mit den Wänden so geformt ist, dass ein einziges Teil gebildet wird, das in die Vorrichtung (2) integrierbar ist.

## Claims

1. Heating, ventilation and/or air-conditioning device (2) for a motor vehicle, comprising:
- a flow channel for a main air stream (F1),
- a first evaporator (8) located in said flow channel, said evaporator (8) allowing condensates (11) from said main airstream (F1) to flow under gravity upon contact with said evaporator (8),
- a path (1) for bypassing the evaporator (8) that is taken by a secondary air stream (F2),
- means (5, 9) for managing the condensates (11) located in the path (1) for bypassing the evaporator (8), said means (5, 9) for managing the condensates (11) comprise a bowl (5) for collecting the condensates (11), said bowl (5) having an upper section (17) which is larger than the lower section (23) of the evaporator (8), the bowl (5) being designed in a leak tight material, on the one hand so that there is no leakage of the condensates (11) into the bypass path (1), and on the other hand so that there is no infiltration of air into the bowl (5), **characterized in that**, said bowl (5) being in the form of a W with two planar interior lateral walls (13) having an inclination and two planar outer lateral walls (25) not having an inclination and extending two lateral faces of the evaporator (8), the inner lateral walls (13) starting at the centre of the bowl (5) and each being oriented towards an outer lateral wall (25) two lateral evacuation ducts (9) being located at the two bottom points of the W.

2. Device (2) according to Claim 1, **characterized in that** the collecting bowl (5) is connected to the two evacuation ducts (9) for the condensates (11).

3. Device (2) according to either of Claims 1 and 2, **characterized in that** said two inner lateral walls (13) of the bowl (5) guide the condensates (11) towards at least said two evacuation ducts (9).

4. Device (2) according to one of the preceding claims, **characterized in that** the secondary air stream (F2) is channelled between the two lateral evacuation ducts (9) within the bypass path (1).

5. Device (2) according to one of Claims 1 to 4, **characterized in that** said bowl (5) is designed in a leak tight material, of the plastic type.

6. Device (2) according to one of Claims 1 to 5, **characterized in that** the bypass path (1) is delimited by walls, said bowl (5) being moulded with the walls so as to form a single piece which can be integrated into the device (2).
